Europäisches Patentamt

European Patent Office

Office européen des brevets

(19)

(11) Publication number:

**0 310 255**
**A1**

# (12) EUROPEAN PATENT APPLICATION

(21) Application number: 88308208.3

(22) Date of filing: 05.09.88

(51) Int. Cl.⁴: **C01B 31/00**

(30) Priority: **14.09.87 US 95983**

(43) Date of publication of application:
**05.04.89 Bulletin 89/14**

(84) Designated Contracting States:
**AT BE CH DE ES FR GB IT LI LU NL SE**

(71) Applicant: **STAUFFER MANAGEMENT
COMPANY c/o ICI AMERICAS INC.
Concorde Pike and New MurphyRoad
Wilmington Delaware 19897(US)**

(72) Inventor: **Bay, Elliott
20 Woodland Way
Ridgefield CT 06877(US)**
Inventor: **Coates, Michael
240 Boulevard
Mountain Lakes NJ 07066(US)**

(74) Representative: **Stephenson, Kenneth et al
Imperial Chemical Industries PLC Legal
Department: Patents PO Box 6 Bessemer
Road
Welwyn Garden City Herts, AL7 1HD(GB)**

(54) **Production of carbonyl difluoride.**

(57) Carbonyl difluoride is formed by oxidation, with oxygen, of a monohalodifluoromethane compound at elevated temperatures.

EP 0 310 255 A1

## PRODUCTION OF CARBONYL DIFLUORIDE

The present invention relates to a novel process for the preparation of carbonyl difluoride.

Carbonyl difluoride is a useful chemical for organic synthesis. A variety of methods for its synthesis have been proposed. For example, Inorganic Synthesis, Vol. VI, pp. 155-158 (1960) mentions its preparation by reaction of carbonyl dichloride with such reagents as hydrogen fluoride or antimony (III) fluoride, direct combination of carbon monoxide and fluorine or by fluorination of carbon monoxide by silver (II) fluoride. Rodd's Chemistry of Carbon Compounds, Second Edition, Vol. I Part C, p. 279 (1965) also mentions synthesis of this compound by introduction of liquid phosgene into a suspension of sodium fluoride in acetonitrile. More recently, Rodd's Chemistry of Carbon Compounds, Supplement to Vol. I (1973) mentions, at page 167, the reaction of calcium fluoride, titanium dioxide and carbon to synthesize this compound, the action of nitrogen trifluoride on phosgene, or the oxidizing of various perfluoro-olefins.

Certain disclosures exist in the chemical literature (e.g., Chemical Abstracts, Vol. 98, 225118t and Vol. 84, 82459c) in regard to the photolysis of either dibromodifluoromethane or chlorofluoromethanes in which carbonyl difluoride was a detected product. These disclosures were intended to represent scientific investigations of the recited halomethane compounds rather than manufacturing techniques for carbonyl difluoride.

Chemical Abstracts, Vol. 93, 132037x described that carbonyl difluoride was observed, along with certain unidentified products, when ozone reacted with $CHClF_2$ and $CCl_2F_2$. In view of the instability of ozone, however, especially at elevated temperatures, it would appear that no heating step was performed.

Lemahieu and Antonik in J. Chim. Phys.-Chum. Biol. 1983, 80(9) 641-647 mention the oxidation and combustion of expensive $CF_3Br$ which apparently yields fluorine, bromine, and trifluoromethyl hypofluorite by-products. These by-products are strong oxidants and would be difficult to handle.

The present invention provides a process for the preparation of carbonyl difluoride which comprises heating a monohalodifluoromethane compound with oxygen at elevated temperature.

The monohalodifluoromethane compound which serves as a starting material for the present invention has the formula $XCHF_2$, where X is halogen such as chlorine or bromine. A representative and preferred compound is chlorodifluoromethane.

The oxidation of the reagent to the desired carbonyl difluoride takes place in the presence of oxygen gas at a sufficiently elevated temperature to accomplish such result. For example, temperatures of about 200°C to about 500°C are contemplated. The reaction can be performed in a nickel tube reactor at about 500°C, for example, with the materials having been preheated (e.g., at 380°C). If desired, the oxidation rate can be moderated by the additional presence of an inert gas, such as helium.

The invention is illustrated by the following Example.

### EXAMPLE

Oxygen, helium, and chlorodifluoromethane were passed separately through pressure regulators set at 20 psig. The flow of these gases (helium, 188 ml/min; oxygen, 47 ml/min; chlorodifluoromethane, 50 ml/min) was controlled with precision needle valves and monitored with rotameters. The gases were preheated prior to mixing by passing them separately through nickel tubes (1/8 inch outer diameter by 6 feet long) coiled in a furnace set at 380°C. The gases were then mixed into a single nickel tube (1/8 inch outer diameter by 5 feet long) in a separate furnace set at 500°C. The exit of this tube was connected to a condensing trap. The trap was placed in a Dewar flask filled with a 1:1 volume/volume mixture of methylene chloride and methanol. Liquid nitrogen was blown through a copper coil immersed in the Dewar flask. The rate of flow of the liquid nitrogen was adjusted so that the trap temperature was -100°C. The exit of the condensing trap was protected with a drying tube. Approximately 5 ml of liquefied gas was collected in the condensing trap after 40 min of reaction. The liquid in the condensing trap was allowed to warm and distil vapour into an infrared gas cell. Infrared analysis showed the presence of carbonyl difluoride.

### Claims

1. A process for the preparation of carbonyl difluoride which comprises heating a monohalodifluoromethane with oxygen at elevated temperature.

2. A process as claimed in Claim 1 wherein the temperature ranges from about 200°C to about 500°C.

3. A process as claimed in Claim 1 or Claim 2 wherein the monohalodifluoromethane compound has the formula $XCHF_2$, where X is chlorine or bromine.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 124 621 (AMERICAN CYANAMID CO.) * Page 10, example 3 * | | C 01 B 31/00 |
| D,A | CHEMICAL ABSTRACTS, vol. 93, no. 13, 29th September 1980, page 621, abstract no. 132037x, Columbus, Ohio, US; V.S. KOMAROV et al.: "Reaction of ozone with halogen-substituted saturated hydrocarbons", & KINET. KATAT. 1980, 21(2), 519-20 | | |

TECHNICAL FIELDS
SEARCHED (Int. Cl.4)

C 01 B 31/00

The present search report has been drawn up for all claims

| Place of search | Date of completion of the search | Examiner |
|---|---|---|
| THE HAGUE | 30-11-1988 | BREBION J.CH. |

EPO FORM 1503 03.82 (P0401)